# EUROPÄISCHE PATENTSCHRIFT

(11) **EP 0 584 045 B1**
(45) Veröffentlichungstag und Bekanntmachung des Hinweises auf die Patenterteilung: **01.03.2000**
(21) Anmeldenummer: 93810568.1
(22) Anmeldetag: 10.08.1993
(51) Int. Cl.: C09B 62/04, D06P 3/66

(54) **Faserreaktive Farbstoffe, deren Herstellung und Verwendung**
Fiber-reactive dyes, their preparation and application
Colorants de fibres réactifs, leur préparation et leur utilisation

(30) Priorität: 19.08.1992 CH 258792
(43) Veröffentlichungstag der Anmeldung: 23.02.1994
(73) Patentinhaber: Ciba Specialty Chemicals Holding Inc., 4057 Basel (CH)
(72) Erfinder: Müller, Bernhard, Dr., D-79588 Efringen-Kirchen (DE)

(56) Entgegenhaltungen:
- EP-A- 0 315 045
- EP-A- 0 372 315
- EP-A- 0 458 743
- EP-A- 0 478 503
- CH-A- 621 358
- CH-A- 634 094
- FR-A- 2 334 724

## Beschreibung

Die vorliegende Erfindung betrifft faserreaktive Farbstoffe, deren Herstellung sowie Verwendung zum Färben von cellulosehaltigen Fasermaterialien aus wässrigem Bad oder zum Bedrucken cellulosehaltiger Fasermaterialien.

Gegenstand der vorliegenden Erfindung sind Reaktivfarbstoffe der Formel 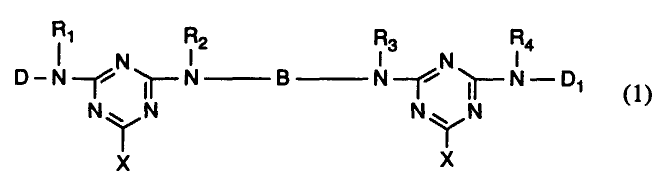 worin B ein Rest der Formel 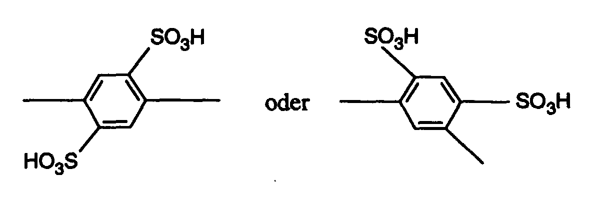 ist, R₁, R₂, R₃ und R₄ unabhängig voneinander je Wasserstoff oder gegebenenfalls durch Halogen, Hydroxy, Cyano, C₁-C₄-Alkoxy, C₁-C₄-Alkoxycarbonyl, Carboxy, Sulfamoyl, Sulfo oder Sulfato substituiertes C₁-C₄-Alkyl bedeuten und
(I) X Chlor und D und D₁ unabhängig voneinander je
(Ia) der Rest eines Dioxazinfarbstoffes,
(Ib) der Rest eines Phthalocyaninfarbstoffes oder
(Ic) der Rest eines Anthrachinonfarbstoffes sind.

Die in der FR-A-2 334 724, der CH-A-634 094 und der CH-A-621 358 offenbarten Farbstoffe unterscheiden sich dadurch vom Gegenstand der vorliegenden Erfindung, dass sie mindestens einen Azochromophor enthalten.

Bevorzugt sind Verbindungen der Formel 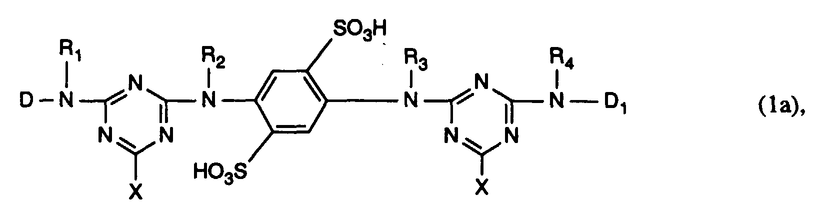 worin D, D₁, R₁, R₂, R₃, R₄ und X jeweils die zuvor angegebene Bedeutung haben.

Stehen R₁, R₂, R₃, R₄ oder etwaige andere Substituenten für einen C₁-C₄-Alkylrest, handelt es sich um einen Methyl, Ethyl-, n- oder iso-Propyl- oder n-, iso-, sec.- oder tert-Butylrest. Der C₁-C₄-Alkylrest kann substituiert sein, z.B. durch Halogen, worunter generell z.B. Brom, Fluor oder insbesondere Chlor zu verstehen ist; Hydroxy; Cyano; C₁-C₄-Alkoxy, welches generell Methoxy, Ethoxy, n- oder iso-Propoxy und n-, iso-, sec.- oder tert.-Butoxy umfasst; C₁-C₄-Alkoxycarbonyl, z.B. Methoxy- oder Ethoxycarbonyl; Carboxy; Sulfamoyl; Sulfo; oder Sulfato.

Beispiele für geeignete Alkylreste R₁, R₂, R₃ und R₄ sind ein beliebiger unsubstituierter C₁-C₄-Alkylrest, Carboxymethyl, β-Carboxyethyl, β-Carboxypropyl, Methoxycarbonylmethyl, Ethoxycarbonylethyl, β-Methoxyethyl, β-Ethoxyethyl, β-Methoxypropyl, β-Chlorethyl, β-Hydroxyethyl, β-Hydroxybutyl, β-Cyanoethyl, Sulfomethyl, β-Sulfoethyl, β-Sulfatoethyl und κ-Bromopropyl.

R₁, R₂, R₃ und R₄ stehen unabhängig voneinander je bevorzugt für Wasserstoff oder C₁-C₄-Alkyl, besonders bevorzugt für Wasserstoff, Methyl oder Ethyl und insbesondere bevorzugt für Wasserstoff.

Bedeuten D und/oder D₁ den Rest eines Dioxazinfarbstoffes gemäss (Ia), so kann dieser z.B. der Formel 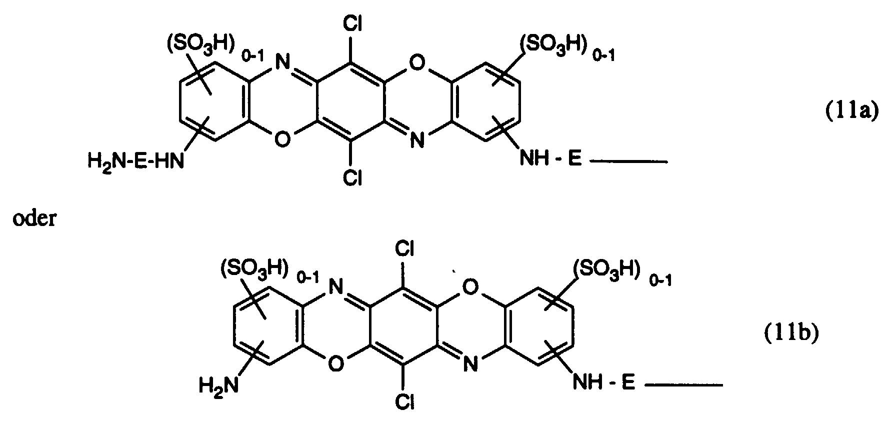 entsprechen, worin E ein Phenylenrest, der z.B. durch Alkyl mit 1 bis 4 C-Atomen, Halogen, Carboxy und/oder Sulfo substituiert sein kann; oder ein Alkylenrest mit 2 bis 6 C-Atomen, z.B. Ethylen, 1-Methyl-1,2-Ethylen, 1,3-Propylen oder geradkettiges oder verzweigtes Butylen, Pentylen oder Hexylen, ist; und die äusseren Benzolringe in den Formeln (11a) und (11b) z.B. durch Alkyl mit 1 bis 4 C-Atomen, Alkoxy mit 1 bis 4 C-Atomen, Acetylamino, Nitro, Halogen, Carboxy, Sulfo oder -SO₂-Z weitersubstituiert sein können und Z z.B. β-Sulfatoethyl, β-Thiosulfatoethyl, β-Phosphatoethyl, β-Acetyloxyethyl, β-Halogenethyl oder Vinyl ist.

Handelt es sich bei D und/oder D₁ um den Rest eines Phthalocyaninfarbstoffes gemäss (Ib), so kann dieser z.B. der Formel 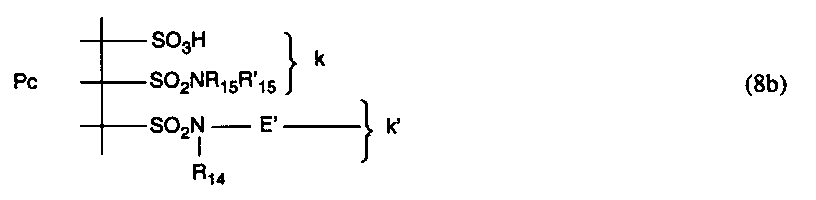 entsprechen, worin Pc der Rest eines Kupfer- oder Nickelphthalocyanins ist, R₁₄ für Wasserstoff oder Alkyl mir 1 bis 4 Kohlenstoffatomen steht, R₁₅ und R'₁₅ unabhängig voneinander je Wasserstoff oder C₁-C₄-Alkyl, das durch Hydroxy oder Sulfo substituiert und/oder durch N oder O unterbrochen sein kann, bedeuten, E' einen Phenylenrest, der durch Alkyl mit 1 bis 4 C-Atomen, Halogen, Carboxy und/oder Sulfo substituiert sein kann, oder einen Alkylenrest mit 2 bis 6 C-Atomen darstellt, und k = 1 - 3 und k' = 1 - 2 ist, wobei die Summe (k+k') 2-4 beträgt.

Bevorzugt sind hierbei solche Phthalocyaninreste D und D₁ der Formel (8b), worin k und k' jeweils die zuvor angegebene Bedeutung haben, Pc für den Rest eines Kupferphthalocyanins steht, R₁₄ Methyl, Ethyl oder insbesondere Wasserstoff ist, R₁₅ und R'₁₅ unabhängig voneinander je Wasserstoff oder C₁-C₄-Alkyl, insbesondere Wasserstoff, bedeuten und E' C₂-C₄-Alkylen oder gegebenenfalls durch Sulfo substituiertes 1,3- oder 1,4-Phenylen, insbesondere Ethylen, 1,3-Phenylen, 1,4-Phenylen oder Sulfophenylen, ist.

Stehen D und/oder D₁ für den Rest eines Anthrachinons gemäss (Ic), entspricht dieser z.B. der Formel 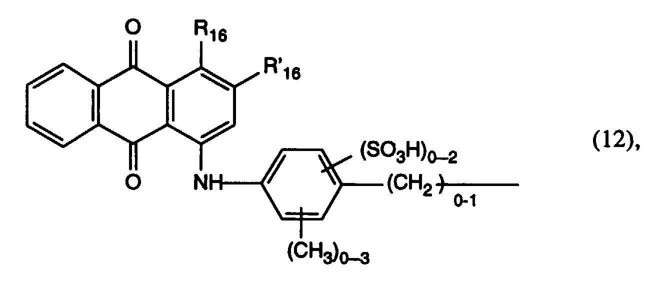 worin einer der Reste R₁₆ und R'₁₆ Amino und der andere Rest Sulfo bedeutet.

D und D₁ können verschieden oder, vorzugsweise, identisch sein.

Insbesondere bevorzugt sind Verbindungen der Formel (1a), worin X Chlor ist, R₁, R₂, R₃ und R₄ unabhängig voneinander je für Wasserstoff, Methyl oder Ethyl stehen und D und D₁ je einen Rest der zuvor angegebenen Formel (8b), (11a), (11b) oder (12) bedeuten. Hierbei sind insbesondere Verbindungen der Formel (1) bevorzugt, worin X Chlor und D und D₁ je einen Rest der Formel (8b), (11a) oder (11b) bedeuten.

Eine besonders bevorzugte Ausführungsform der vorliegenden Erfindung betrifft Verbindungen der Formel (1a), worin R₁, R₂, R₃ und R₄ unabhängig voneinander je für Wasserstoff, Methyl oder Ethyl stehen und
(I) X Chlor und D und D₁ je einen Rest der Formel 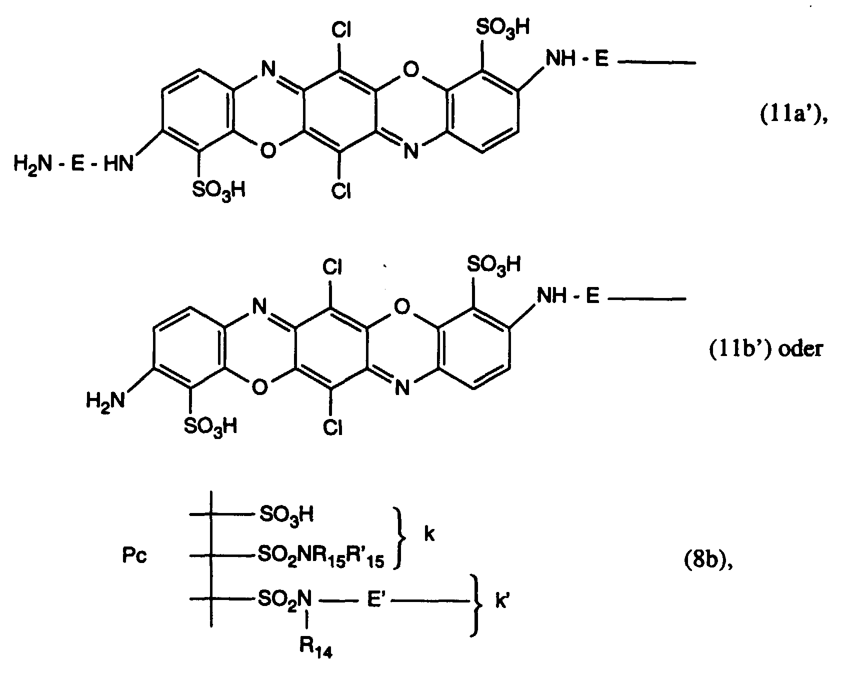 worin E ein Alkylenrest mit 2 bis 4 C-Atomen, vorzugsweise Ethylen oder 1,3-Propylen, ist, Pc für den Rest eines Kupferphthalocyanins steht, R₁₄, R₁₅ und R'₁₅ unabhängig voneinander je Methyl, Ethyl oder insbesondere Wasserstoffbedeuten, E' für Ethylen, 1,3-Phenylen, 1,4-Phenylen oder Sulfophenylen steht und k und k' je die zuvor angegebene Bedeutung haben, darstellen.

Die Verbindungen der Formel (1) sind faserreaktiv. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Die Verbindungen der Formel (1) weisen mindestens zwei und vorzugsweise vier bis acht Sulfogruppen auf, wobei diese jeweils in Form der freien Säure oder vorzugsweise in Salzform, z.B. als Na-, Li-, K- oder Ammioniumsalz, vorliegen. Die Verbindungen der Formel (1) können auch als Mischsalz, z.B. als Na/Li- oder Na/Li/Ammoniumsalz, vorliegen.

Die Verbindungen der Formel (1) können analog zu dem in der EP-A 0 478 503 beschriebenen Verfahren hergestellt werden, z.B. indem man in etwa 1 Aequivalent eines organischen Farbstoffes der Formel

D-NHR₁

oder ein Farbstoffvorprodukt, in etwa 1 Aequivalent eines organischen Farbstoffes der Formel

D-NHR₄

oder ein Farbstoffvorprodukt, in etwa 2 Aequivalente 2,4,6-Trichlor-s-triazin (Cyanurchlorid) und in etwa 1 Aequivalent eines Diamins der Formel 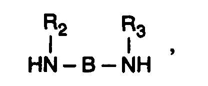 worin B, D, D₁, R₁, R₂, R₃ und R₄ jeweils die zuvor angegebene Bedeutung haben, in beliebiger Reihenfolge miteinander umsetzt, oder, im Fall von Farbstoffvorprodukten, die erhaltenen Zwischenprodukte in die gewünschten Farbstoffe überführt und gegebenenfalls eine weitere Umwandlungsreaktion anschliesst.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten sich vorteilhafterweise nach den besonderen Bedingungen richtet.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist. Da unter bestimmten Voraussetzungen Hydrolyse eines Halogentriazinylrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus Diamin, Triazin und Farbstoff D-NHR₁ bzw. D₁-NHR₄ zweckmässigerweise zuerst ausgeführt wird, die des Triazins mit dem Farbstoff oder dem Diamin, ist von Fall zu Fall verschieden und richtet sich vor allem nach der Löslichkeit der beteiligten Aminoverbindungen und der Basizität der zu acylierenden Aminogruppen.

Gegenstand der Erfindung ist ferner ein Verfahren zum Färben und Bedrucken von cellulosehaltigen Fasermaterialien mit den erfindungsgemässen Farbstoffen der Formel 1. Als Fasermaterialien kommen beispielsweise die natürlichen Cellulosefasern, wie Baumwolle, Leinen und Hanf, sowie Zellstoff und regenerierte Cellulose in Betracht. Die Farbstoffe sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise aufdas Fasermaterial applizieren und aufder Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült. Zum Färben und Bedrucken werden die üblichen Färbe- bzw. Druckverfahren angewendet.

Die Farbstoffe zeichnen sich durch ein gutes Fixiervermögen und ein sehr gutes Aufbauvermögen aus. Sie können nach dem Ausziehverfahren über einen sehr grossen Temperaturbereich eingesetzt werden und eignen sich deshalb auch sehr gut zum Färben von Baumwolle-Polyester-Mischgeweben nach den für solche Gewebe empfohlenen Bedingungen. Die Fixiergrade sind hoch, und die Differenz zwischen Ausziehgrad und Fixiergrad ist bemerkenswert klein, d.h. der Seifverlust sehr gering. Es ergeben sich gut reproduzierbare, egale Färbungen. Die Farbstoffe der Formel (1) eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit und eine sehr gute Chlorbadewasserechtheit.

Die Farbstoffe der Formel (1) liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt.
Beispiel 1: 442,3 Teile 2,4,6-Trichlor-1,3,5-triazin werden mit 4 Teilen eines Netzmittels und 10 Teilen Dinatriumphosphat in 2500 Teilen Eis/Wasser angeschlämmt. Man tropft eine neutrale Lösung von 268,3 Teilen 2,5-Diamino-1,4-benzoldisulfonsäure in 2500 Teilen Wasser derart zu, dass die Temperatur 5°C nicht übersteigt; dabei wird der pH-Wert durch Zugabe von Natriumhydroxidlösung konstant bei ca. 3,0 gehalten. Die 2,5-Bis[(4,6-dichloro-1,3,5-triazin-2-yl)-amino]-benzol-1,4-disulfonsäure enthaltende Suspension wird neutralisiert und direkt weiterverarbeitet.
Beispiel 2: Die gemäss Beispiel 1 erhaltene Suspension von 2,5-Bis[(4,6-dichloro-1,3,5-triazin-2-yl)-amino]-benzol-1,4-disulfonsäure wird zu 1204,8 Teilen 10-Amino-3-(3-aminopropylamino)-6,13-dichloro-4,11-triphendioxazindisulfosäure, mit Lithiumhydroxid bei pH 9,5 in 9500 Teilen Wasser gelöst, zugetropft, wobei der pH-Wert durch gleichzeitige Zugabe von Natriumhydroxidlösung konstant bei ca. 9,5 gehalten wird. Man lässt auf Raumtemperatur erwärmen, befreit die Farbstofflösung dialytisch von Salz und dampft den Farbstoff der Formel 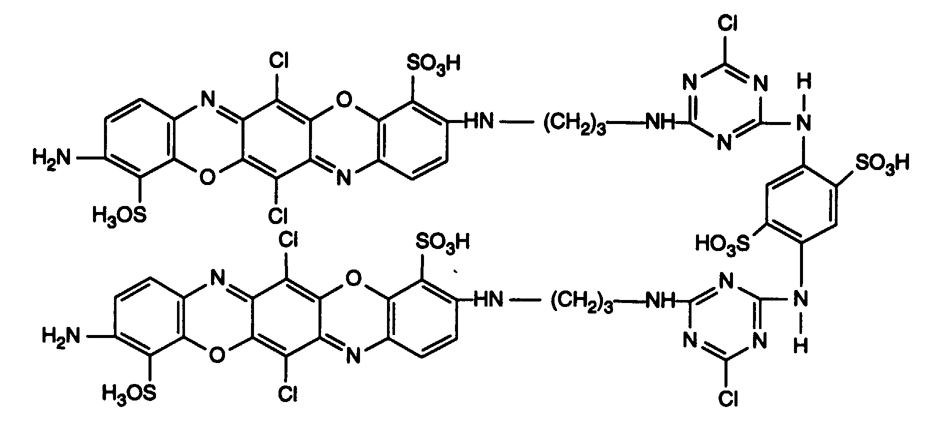 ein.
Beispiele 3-8: Verfährt man wie in Beispiel 2 beschrieben und verwendet anstelle des dort eingesetzten Chromophors die in der folgenden Tabelle angegebenen, erhält man analoge Farbstoffe. 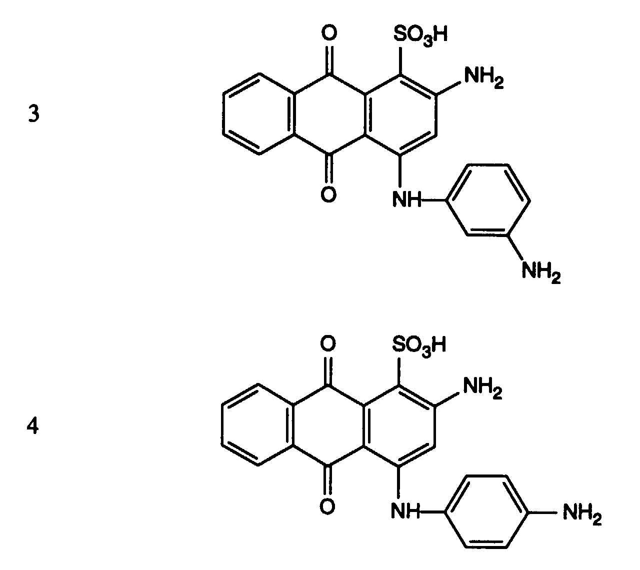 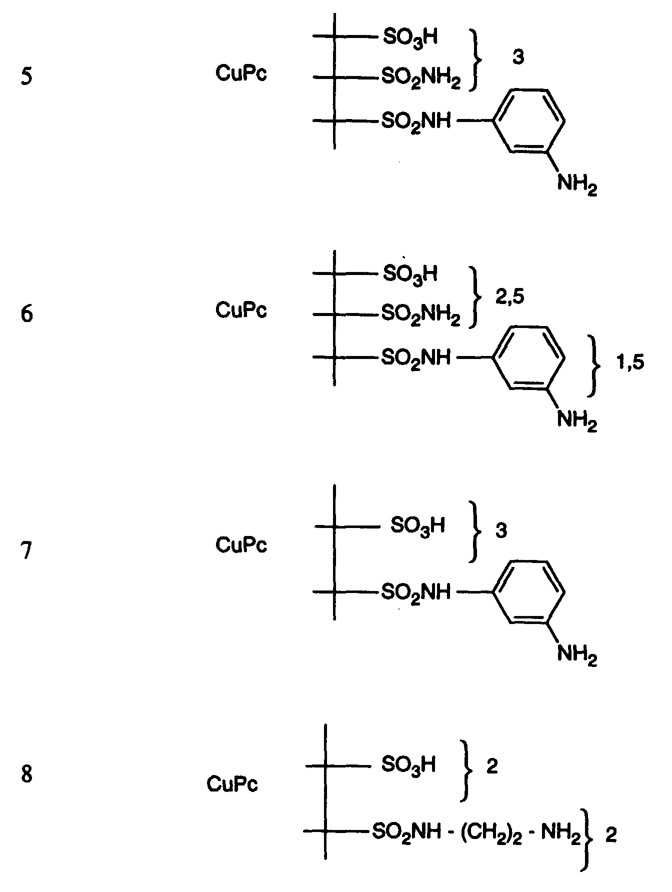
Beispiel 9: 442,3 Teile 2,4,6-Trichlor-1,3,5-triazin werden mit 4 Teilen eines Netzmittels und 10 Teilen Dinatriumphosphat in 2500 Teilen Eis/Wasser angeschlämmt. Man tropft eine neutrale Lösung von 268,3 Teilen 4,6-Diamino-1,3-benzoldisulfonsäure in 2500 Teilen Wasser derart zu, dass die Temperatur 5°C nicht übersteigt; dabei wird der pH-Wert durch Zugabe von Natrium- oder Lithiumhydroxidlösung konstant bei ca. 6,5 gehalten. Die 4,6-Bis[(4,6-dichloro-1,3,5-triazin-2-yl)-amino]-benzol-1,3-disulfonsäure enthaltende Suspension wird neutralisiert und direkt weiterverarbeitet.
Beispiel 10: Die gemäss Beispiel 9 erhaltene Suspension von 4,6-Bis[(4,6-dichloro-1,3,5-triazin-2-yl)-amino]-benzol-1,3-disulfonsäure wird zu 1063,1 Teilen 1-Amino-4-(3-amino-2,4,6-trimethyl-5-sulfo-phenyl)-anthrachinon-2-sulfonsäure, neutral gelöst in Wasser, zugetropft, wobei durch gleichzeitige Zugabe von Natriumhydroxidlösung der pH-Wert konstant bei 7,0 gehalten wird. Man lässt auf Raumtemperatur erwärmen und salzt nach beendeter Reaktion den Farbstoff der Formel 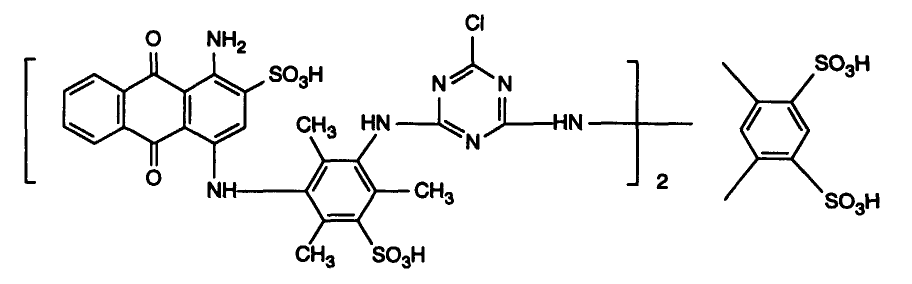 aus und wäscht und trocknet ihn. Der Farbstoff färbt Cellulose in brillanten blauen Tönen.
Beispiel 11: Die gemäss Beispiel 9 erhaltene Suspension von 4,6-Bis[4,6-dichloro-1,3,5-triazin-2-yl)-amino]-benzol-1,3-disulfonsäure wird zu 750,8 Teilen 1-Amino-4-(3-aminopropyl)-anthrachinon-2-sulfonsäure, neutral gelöst in Wasser, zugetropft, wobei durch gleichzeitige Zugabe von Natriumhydroxidlösung der pH-Wert konstant bei 7,0 gehalten wird. Man lässt auf Raumtemperatur erwärmen und salzt nach beendeter Reaktion den Farbstoff der Formel 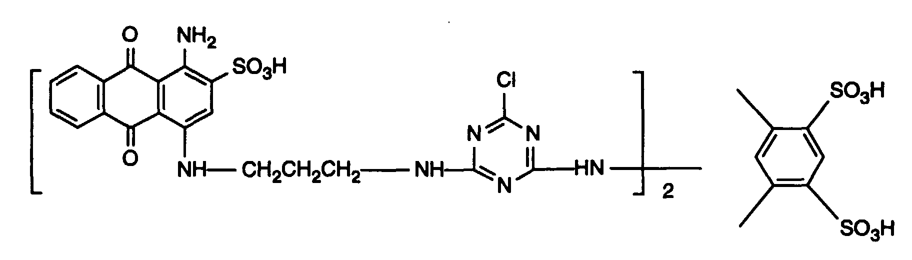 aus und wäscht und trocknet ihn. Der Farbstoff färbt Cellulose in brillanten blauen Tönen.

## Patentansprüche

1. Reaktivfarbstoffe der Formel 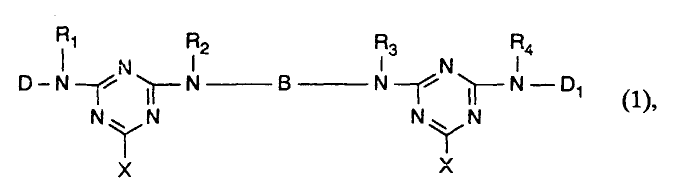 worin B ein Rest der Formel 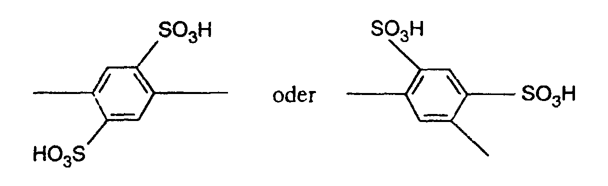 ist, R₁, R₂, R₃ und R₄ unabhängig voneinander je Wasserstoff oder gegebenenfalls durch Halogen, Hydroxy, Cyano, C₁-C₄-Alkoxy, C₁-C₄-Alkoxycarbonyl, Carboxy, Sulfamoyl, Sulfo oder Sulfato substituiertes C₁-C₄-Alkyl bedeuten und
(I) X Chlor und D und D₁ unabhängig voneinander je
(Ia) der Rest eines Dioxazinfarbstoffes,
(Ib) der Rest eines Phthalocyaninfarbstoffes oder
(Ic) der Rest eines Anthrachinonfarbstoffes sind.

2. Reaktivfarbstoffe gemäss Anspruch 1 der Formel 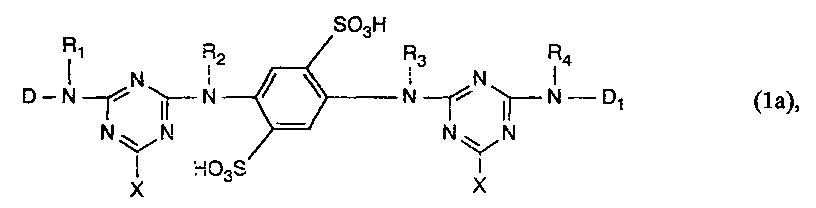 worin D, D₁, R₁, R₂, R₃, R₄ und X jeweils die im Anspruch 1 angegebene Bedeutung haben.

3. Reaktivfarbstoffe gemäss Anspruch 1 oder 2, dadurch gekennzeichnet, dass R₁, R₂, R₃ und R₄ unabhängig voneinander je Wasserstoff, Methyl oder Ethyl bedeuten.

4. Reaktivfarbstoffe gemäss einem der Ansprüche 1 bis 3, dadurch gekennzeichnet, dass D und D₁ identisch sind.

5. Reaktivfarbstoffe gemäss einem der Ansprüche 1 bis 4, dadurch gekennzeichnet, dass X Chlor ist und D und/oder D₁ einem Dioxazinrest der Formel 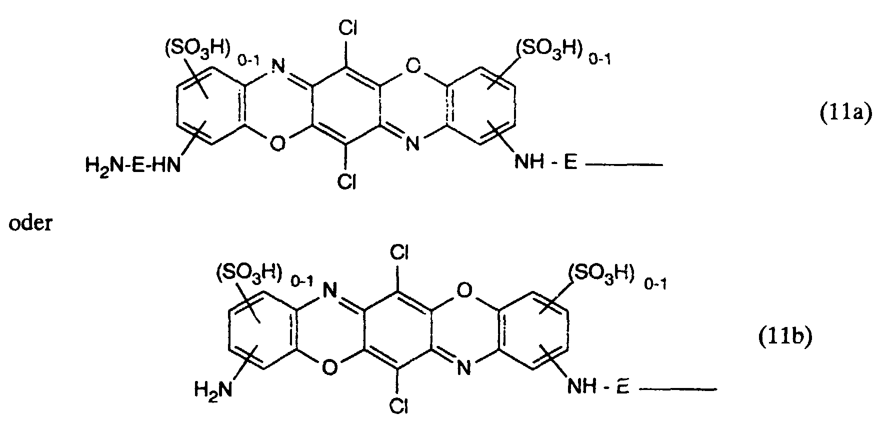 entsprechen, worin E ein unsubstituierter oder durch Alkyl mit 1 bis 4 C-Atomen, Halogen, Carboxy und/oder Sulfo substituierter Phenylenrest oder ein Alkylenrest mit 2 bis 6 C-Atomen ist, die äusseren Benzolringe unsubstituiert oder durch Alkyl mit 1 bis 4 C-Atomen, Alkoxy mit 1 bis 4 C-Atomen, Acetylamino, Nitro, Halogen, Carboxy, Sulfo oder -SO₂-Z weitersubstituiert sind und Z β-Sulfatoethyl, β-Thiosulfatoethyl, β-Phosphatoethyl, β-Acetyloxyethyl, β-Halogenethyl oder Vinyl bedeutet.

6. Reaktivfarbstoffe gemäss einem der Ansprüche 1 bis 4, dadurch gekennzeichnet, dass X Chlor ist und D und/oder D₁ einem Phthalocyaninrest der Formel 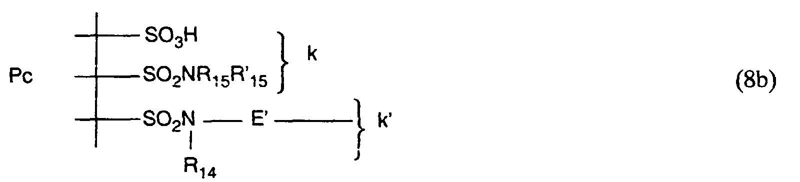 entsprechen, worin Pc für den Rest eines Kupferphthalocyanins steht, R₁₄ Methyl, Ethyl oder Wasserstoff ist, R₁₅ und R'₁₅ unabhängig voneinander je Wasserstoff oder C₁-C₄-Alkyl bedeuten, E' für C₂-C₄-Alkylen oder gegebenenfalls durch Sulfo substituiertes 1,3- oder 1,4-Phenylen steht und k = 1 - 3 und k' = 1 - 2 ist, wobei die Summe (k+k') 2 - 4 beträgt.

7. Reaktivfarbstoffe gemäss einem der Ansprüche 1 bis 4, dadurch gekennzeichnet, dass X Chlor ist und D und/oder D₁ dem Rest eines Anthrachinons der Formel 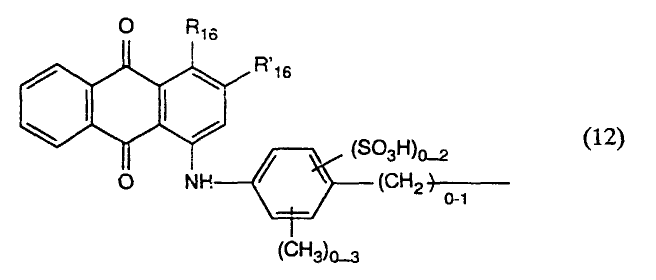 entsprechen, worin einer der Reste R₁₆ und R'₁₆ Amino und der andere Rest Sulfo bedeutet.

8. Reaktivfarbstoffe der Formel (1a) gemäss Anspruch 2, worin R₁, R₂, R₃ und R₄ unabhängig voneinander je für Wasserstoff, Methyl oder Ethyl stehen und
(I) X Chlor und D und D₁ je einen Rest der Formel 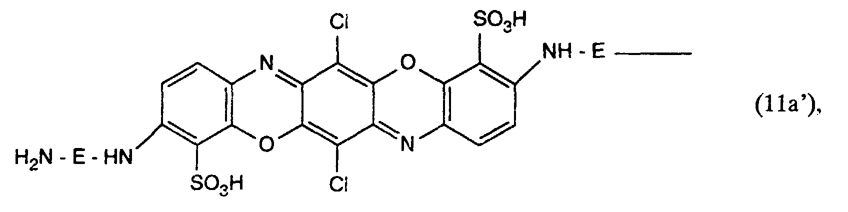 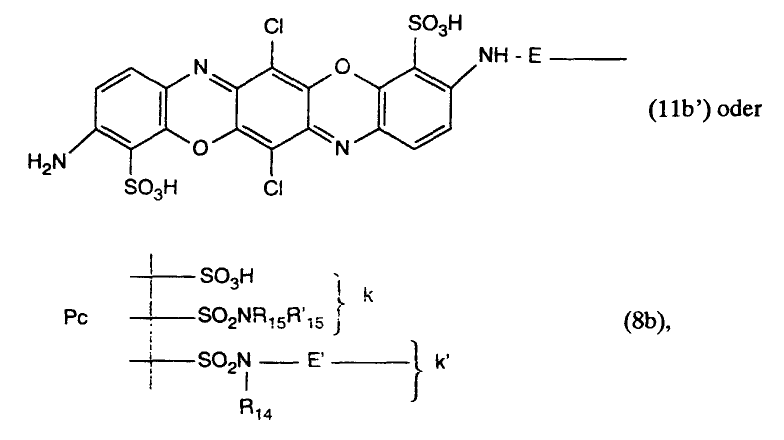 worin E ein Alkylenrest mit 2 bis 4 C-Atomen ist, Pc für den Rest eines Kupferphthalocyanins steht, R₁₄, R₁₅ und R'₁₅ unabhängig voneinander je Methyl, Ethyl oder Wasserstoff bedeuten, E' für Ethylen, 1,3-Phenylen, 1,4-Phenylen oder Sulfophenylen steht und k = 1 - 3 und k' = 1 - 2 ist, darstellen.

9. Verfahren zur Herstellung von Verbindungen der Formel (1) gemäss Anspruch 1, dadurch gekennzeichnet, dass man in etwa 1 Aequivalent eines organischen Farbstoffes der Formel
D-NHR₁
oder ein Farbstoffvorprodukt, in etwa 1 Aequivalent eines organischen Farbstoffes der Formel
D-NHR₄
oder ein Farbstoffvorprodukt, in etwa 2 Aequivalente 2,4,6-Trichlor-s-triazin und in etwa 1 Aequivalent eines Diamins der Formel 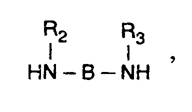 worin B, D, D₁, R₁, R₂, R₃ und R₄ jeweils die im Anspruch 1 angegebene Bedeutung haben, in beliebiger Reihenfolge miteinander umsetzt.

10. Verfahren zum Färben oder Bedrucken von cellulosehaltigen Fasermaterialien, dadurch gekennzeichnet, dass man diese Materialien in Gegenwart eines oder mehrerer Reaktivfarbstoffe der Formel (1) gemäss Anspruch 1 färbt.

11. Verfahren gemäss Anspruch 10 zum Färben von Baumwolle.

## Claims

1. A reactive dye of formula 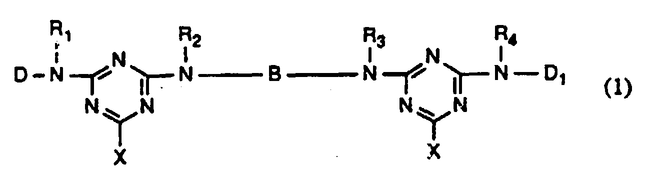 wherein B is a radical of formula 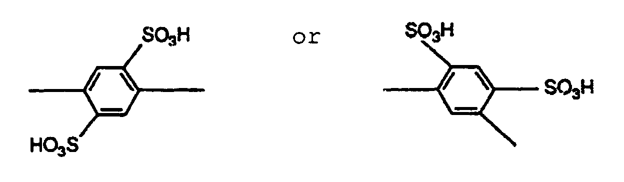 R₁,R₂,R₃ and R₄ are each independently of one another hydrogen, unsubstituted C₁-C₄alkyl or C₁-C₄alkyl which is substituted by halogen, hydroxy, cyano, C₁-C₄alkoxy, C₁-C₄alkoxycarbonyl, carboxy, sulfamoyl, sulfo or sulfato and
(I) X is chloro D and D₁ are each independently of the other
(Ia) the radical of a dioxazine dye,
(Ib) the radical of a phthalocyanine dye, or
(Ic) the radical of an anthraquinone dye.

2. A reactive dye according to claim 1 of formula 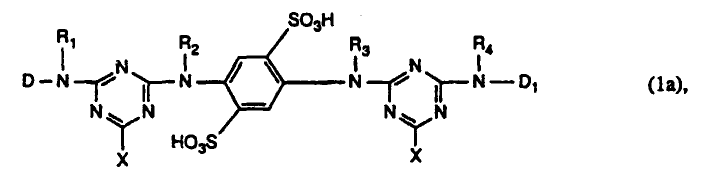 wherein D, D₁, R₁, R₂, R₃, R₄ and X are each as defined in claim 1.

3. A reactive dye according to claim 1 or 2, wherein R₁, R₂, R₃ and R₄ are each independently of one another hydrogen, methyl or ethyl.

4. A reactive dye according to one of claims 1 to 3, wherein D and D₁ are identical.

5. A reactive dye according to one of claims 1 to 4, wherein X is chloro and D and/or D₁ are a dioxazine radical of formula 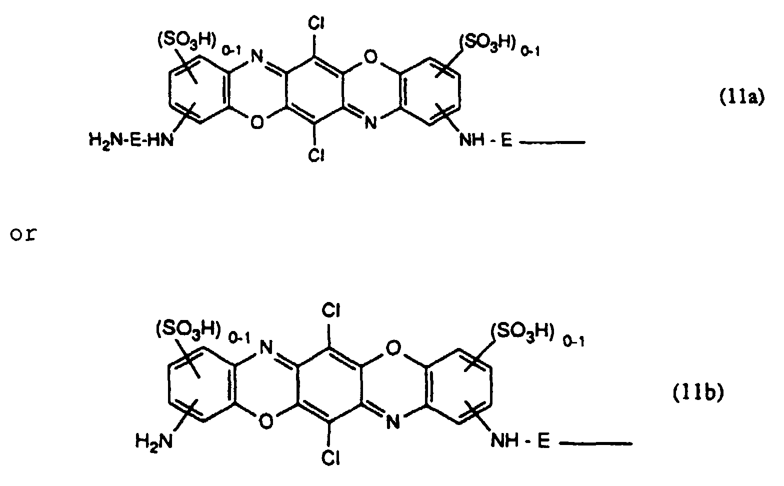 wherein E is a phenylene radical which is unsubstituted or substituted by alkyl of 1 to 4 carbon atoms, halogen, carboxy and/or sulfo; or is an alkylene radical of 2 to 6 carbon atoms; the outer benzene rings are unsubstituted or further substituted by alkyl of 1 to 4 carbon atoms, alkoxy of 1 to 4 carbon atoms, acetylamino, nitro, halogen, carboxy, sulfo or -SO2-Z, and Z is β-sulfatoethyl, β-thiosulfatoethyl, β-phosphatoethyl, β-acetyloxyethyl, β-haloethyl or vinyl.

6. A reactive dye according to one of claims 1 to 4, wherein X is chloro and D and/or D₁ are a phthalocyanine radical of formula 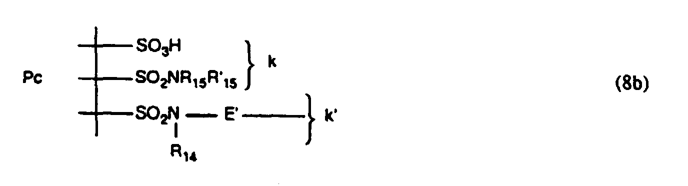 wherein Pc is the radical of a copper phthalocyanine, R₁₄ is methyl, ethyl or hydrogen, R₁₅ and R'₁₅ are each independently of the other hydrogen or C₁-C₄alkyl, E' is C₂-C₄alkylene or unsubstituted or sulfo-substituted 1,3- or 1,4-phenylene, and k = 1-3 and k' = 1-2, and the sum of (k+k') is 2-4.

7. A reactive dye according to one of claims 1 to 4, wherein X is chloro and D and/or D₁ are the radical of an anthraquinone of formula 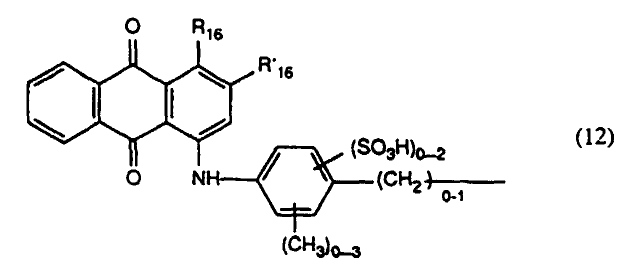 wherein one of radicals R₁₆ and R'₁₆ is amino and the other is sulfo.

8. A reactive dye of formula (1a) according to claim 2, wherein R₁, R₂, R₃ and R₄ are each independently of one another hydrogen, methyl or ethyl, and
(I) X is chloro and D and D₁ are each a radical of formula 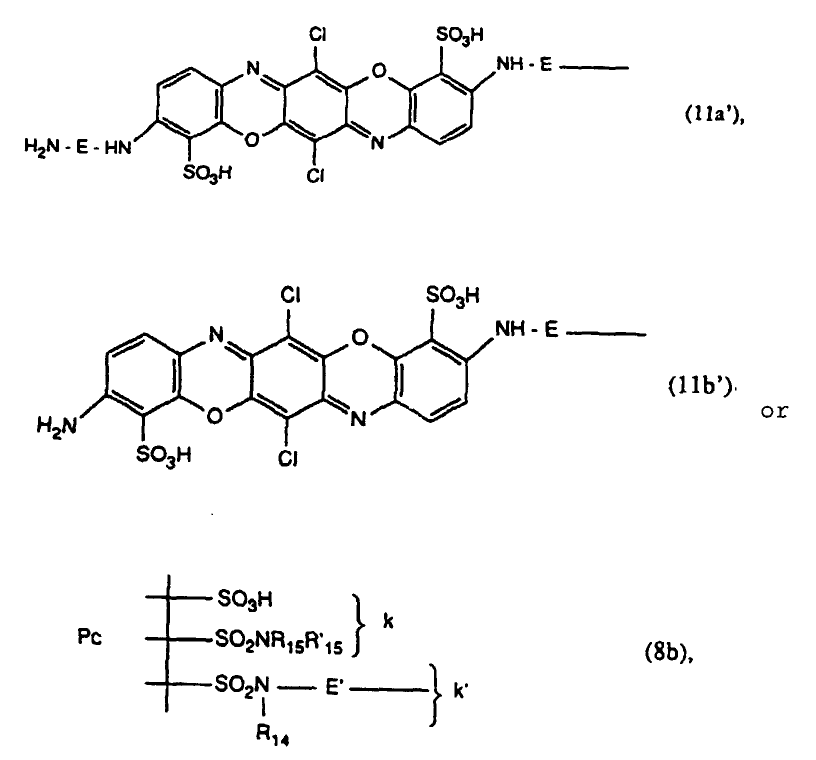 wherein E is an alkylene radical of 2 to 4 carbon atoms, Pc is the radical of a copper phthalocyanine, R14, R15 and R'15 are each independently of one another methyl, ethyl or hydrogen, E' is ethylene, 1,3-phenylene 1,4-phenylene or sulfophenylene, and k = 1-3 and k' = 1-2.

9. A process for the preparation of a compound of formula (1) according to claim 1, which comprises reacting about 1 equivalent of an organic dye of formula
D-NHR₁
or a dye precursor, about 1 equivalent of an organic dye of formula
D₁-NHR₄
or a dye precursor, about 2 equivalents of 2,4,6-trichloro-s-triazine and about 1 equivalent of a diamine of formula 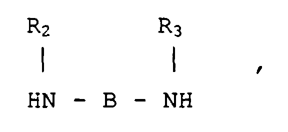 wherein B, D, D₁, R₁, R₂, R₃ and R₄ are each as defined in claim 1, with each other in any order.

10. A process for dyeing or printing cellulosic fibre materials, which comprises dyeing said materials in the presence of one or more than one reactive dye of formula (1) according to claim 1.

11. A process according to claim 10 for dyeing cotton.

## Revendications

1. Colorants réactifs de formule 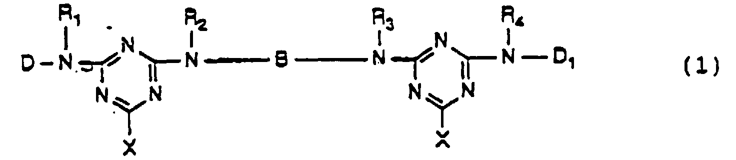 où B représente un reste de formule 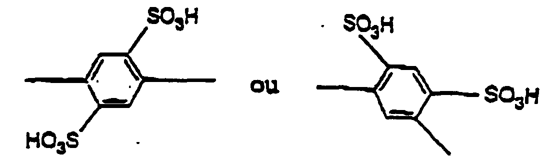 R₁, R₂, R₃ et R₄ représentent chacun, indépendamment les uns des autres, des atomes d'hydrogène ou des groupes alkyle éventuellement substitué par des atomes d'halogènes, des substituants hydroxy, cyano, alkoxy en C₁-C₄, (alkoxy en C₁-C₄)-carbonyle, carboxy, sulfamoyle, sulfo ou sulfato et
(I) X représente des atomes de chlore et D et D₁ représentent chacun, indépendamment l'un de l'autre.
(Ia) le reste d'un colorant de dioxazine.
(Ib) le reste d'un colorant de phtalocyanine ou
(Ic) le reste d'un colorant d'anthraquinone.

2. Colorants réactifs selon la revendication 1 de formule 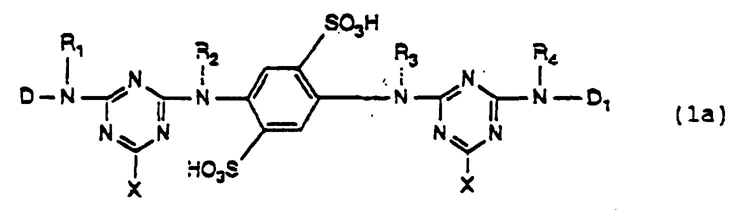 où: D, D₁, R₁, R₂, R₃, R₄ et X possèdent chacun la signification donnée à la revendication 1.

3. Colorants réactifs selon la revendication 1 ou 2, caractérisés en ce que R₁, R₂, R₃ et R₄ représentent chacun, indépendamment les uns des autres, des atomes d'hydrogène, des groupes méthyle ou éthyle.

4. Colorants réactifs selon l'une des revendications 1 à 3, caractérisés on ce que D et D₁ sont identiques.

5. Colorants réactifs selon l'une des revendications 1 à 3, caractérisés on ce que X représente un atome de chlore et D et/ou D₁ représentent un reste de dioxazine de formule 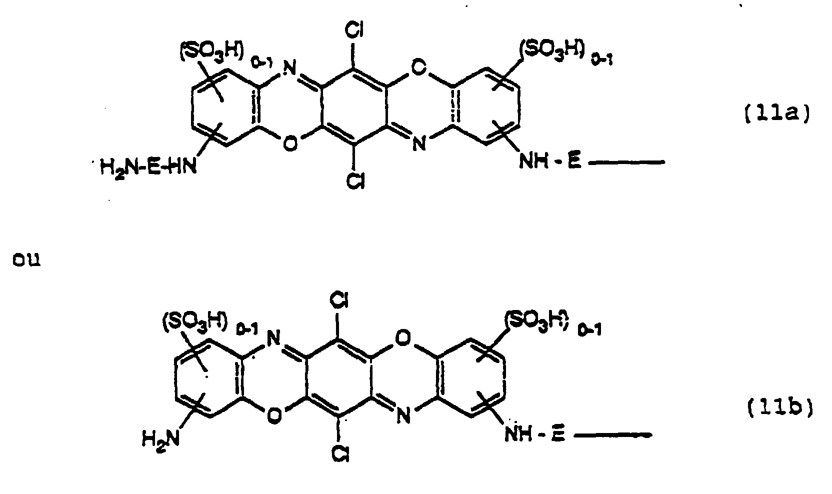 où E représente un reste phénylène non substitué ou substitué par des substituants alkyle comportant de 1 à 4 atomes de carbone, halogène, carboxy et/ou sulfo ou un reste alkylène comportant 2 à 6 atomes de carbone, les cycles benzéniques extérieurs pouvant être non substitués ou substitués par des substituants alkyle comportant 1 à 4 atomes de carbone, alkoxy comportant 1 à 4 atomes de carbone, acétylamino, nitro, halogène, carboxy, sulfo ou -SO₂-Z et Z représente par exemple β-sulfatoéthyle, β-thiosulfatoéthyle, β-phosphatoéthyle, β-acétyloxyéthyle, β-halogénoéthyle ou vinyle.

6. Colorants réactifs selon l'une des revendications 1 à 4, caractérisés an ce que X représente un atome de chlore et D et/ou D₁ représentent un reste de phtalocyanine de formule 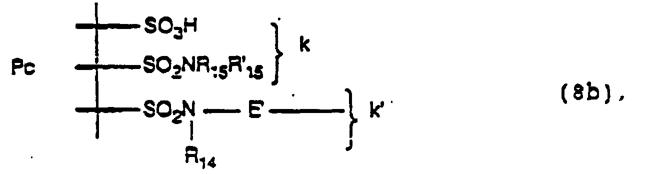 où Pc représente le reste d'une phtalocyanine de cuivre, R₁₄ des groupes méthyle, éthyle ou un atome d'hydrogène, R₁₅ et R'₁₅ représentent chacun, indépendamment l'un de l'autre, un atome d'hydrogène ou un groupe alkyle en C₁-C₄, E' représente des groupes alkylène on C₂-C₄ ou 1,3- ou 1,4-phénylène éventuellement substitué par un substituant sulfo et k = 1 à 3 et k' = 1 à 2, la somme de (k + k') étant de 2 à 4.

7. Colorants réactifs selon l'une des revendications 1 à 4, caractérisés an ce que X représente un atome de chlore et D et/ou D₁ représentent un reste d'anthraquinone de formule 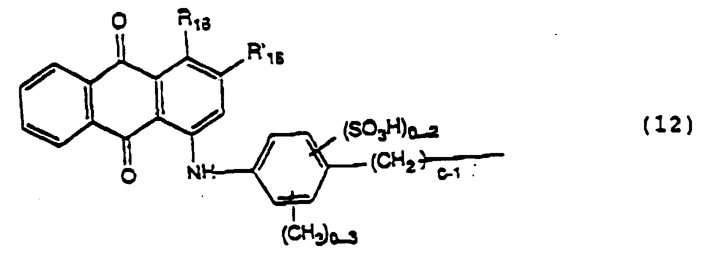 où l'un dus restes R₁₆ et R'₁₆ représente un groupe amino et l'autre un reste sulfo.

8. Colorants réactifs de formule (1a) selon la revendication 2, où R₁, R₂, R₃ et R₄ représentent chacun, indépendamment les uns des autres, des atomes d'hydrogène, des groupes méthyle ou éthyle et
(I) X représente un atome de chlore et D et D₁ représentent chacun un reste de formule 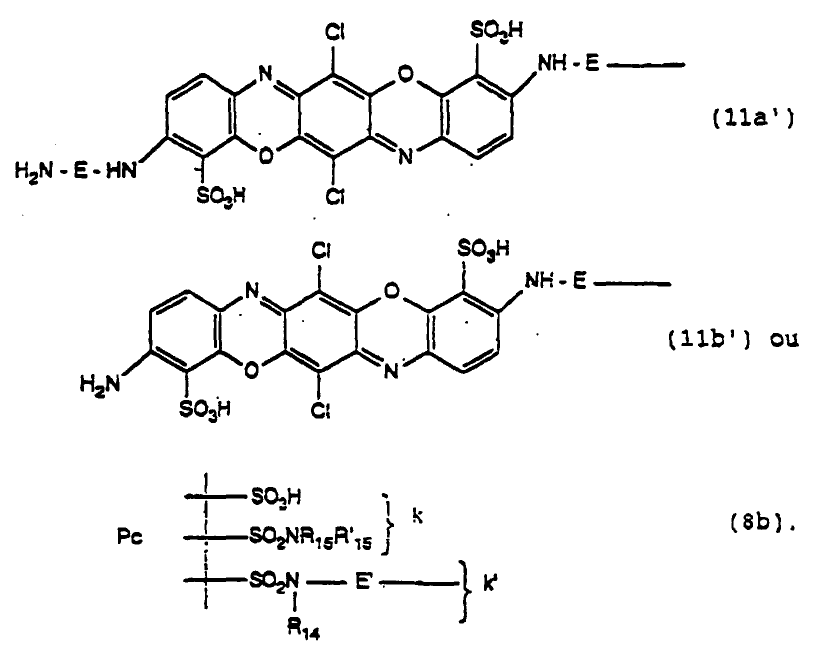 où E représente un reste alkylène comportant 2 à 4 atomes de carbone, Pc représente un reste d'une phtalocyanine de cuivre, R₁₄, R₁₅ et R'₁₅ représentent chacun, indépendamment l'un de l'autre, des groupes méthyle, éthyle ou des atomes d'hydrogène, E' représente des groupes éthylène, 1,3-phénylène, 1,4-phénylène ou sulfophénylène et k = 1 à 3 et k' = 1 à 2.

9. Procédé de préparation de composés de formule (1) selon la revendication 1, caractérisé en ce qu'on fait réagir dans une succession arbitraire 1 équivalent d'un colorant organique de formule
D-NHR₁
ou un précurseur de colorant, avec 1 équivalent d'un colorant organique de formule
D-NHR₁
ou un précurseur de colorant, avec environ 2 équivalents do 2,4,6-trichloro-s-triazine et environ 1 équivalent d'une diamine 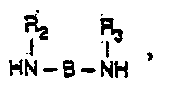 de formule où B, D, D₁, R₁, R₂, R₃ et R₄ ayant la signification donnée à la revendication 1,

10. Procédé pour la teinture ou l'impression de matières de fibres cellulosiques caractérisé en ce qu'on teint ces matières en présence d'un ou plusieurs colorants réactifs de formule (1) selon la revendication 1.

11. Procédé selon la revendication 10 pour la teinture de coton.
